# EUROPÄISCHE PATENTANMELDUNG

(11) **EP 4 799 958 A1**
(43) Veröffentlichungstag der Anmeldung: **02.09.2026**
(21) Anmeldenummer: 26161239.4
(22) Anmeldetag: 27.02.2026
(51) Int. Cl.: B65G 9/00, B65G 47/61, B65G 17/20, B65G 17/48, B65G 19/02

(54) **FÖRDERANLAGE MIT FÖRDEREINHEIT ZUM HÄNGENDEN TRANSPORT VON TRANSPORTELEMENTEN FÜR VERSCHIEDEARTIGE FÖRDERGÜTER**

(30) Priorität: 28.02.2025 CH 1972025; 10.09.2025 CH 10502025; 01.12.2025 CH 13962025
(71) Anmelder: FERAG AG, 8340 Hinwil (CH)
(72) Erfinder: FENILE, Roberto, 8340 Hinwil (CH)
(74) Vertreter: Frei Patent Attorneys

(57) **Zusammenfassung**

Förderanlage (100) mit einer Mehrzahl an Fördereinheiten welche jeweils ein Förderelement (5) mit einem an diesem angebrachten Traghaken (11) und ein Transportelement (7) aufweisen. Wobei das Transportelement (7) mit einer Rahmenstruktur (8) ausgestattet ist, und mit einem an der Rahmenstruktur (8) angebrachten Aufhängehaken (12) versehen ist und wobei der Aufhängehaken (12) im Traghaken (11) des Förderelementes (5) hängend gelagert ist, wobei das Transportelement (7) als unterschiedliche ausgestaltete Transporttaschen (15, 21) ausgeführt sein kann und wobei die Transporttaschen (15, 21) in Fördererrichtung F jeweils eine vorlaufende und eine nachlaufende Taschenwand (16, 17; 26, 27) aufweisen, die über einen Taschenbodenabschnitt (18, 28) miteinander verbunden sind wodurch ein Aufnahmeraum ausbildet wird, in dem die Fördergüter gefördert werden können. Wobei die unterschiedlich ausgestalteten Transporttaschen (15, 21) in einer gemeinsamen Förderanlage (100) betrieben werden können und die unterschiedlich ausgestalteten Transporttaschen (15,21) zur Entladung oder zur Beladung der Fördergüter (2) jeweils einer taschenspezifischen Entladevorrichtung (53, 63) bzw. Beladevorrichtung zugeführt werden.

## Beschreibung

Die vorliegende Erfindung bezieht sich auf das Gebiet der Transport- und Fördertechnik. Sie betrifft eine Förderanlage mit einer Mehrzahl von Fördereinheit zum hängenden Transport von Transportelementen, insbesondere von unterschiedlichen Transporttaschen, für die Förderung von verschiedenartigen Fördergütern gemäss den Oberbegriffen der unabhängigen Ansprüche 1 und 15.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, beispielsweise Kleiderbügel mit daran aufgehängten Kleidungsstücken, oder in entsprechende Transportelemente wie beispielsweise Transporttaschen eingebracht, die wiederum hängend an den Förderelementen gelagert sind. Im Stand der Technik sind Förderanlagen bekannt, die jeweils einen Typ von Transportelementen in Form von Fördertaschen in dieser Förderanlage Verwendung finden. Somit werden alle Fördergüter in diesem Typ von Förderelement gefördert. Da die Fördergüter sehr heterogen sind, sind die Förderelemente in Form von Fördertaschen oftmals zu gross für einen Teil der Fördergüter, was keine optimale Ausnutzung des Fördervolumen bedeutet. Andererseits benötigen gerade in automatisierten Förderanlagen unterschiedliche Förderelemente in Form von Fördertaschen auch unterschiedliche Beladestationen und unterschiedliche Entladestationen für die jeweiligen Förderelemente.

Ebenfalls bekannt sind schwerkraftgeförderte Fördersysteme, bei welchen sich einzelne mit Rädern ausgestattete Förderelemente auf entsprechenden Laufschienen bewegen. Ein Beispiel eines solchen schwerkraftgeförderten, schienengeführten Fördersystems ist aus der WO 2016/030275 A1 der Anmelderin bekannt.

Hängefördersysteme mit Transportelementen sind besonders geeignet für die effiziente Förderung von heterogenen Stückgut-Waren, wie beispielsweise Werkstücken in Produktionsprozessen, Kosmetikartikel, Ersatzteilen, Konsumgütern wie Büchern, Kleidern, Schuhen, etc.

So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in leere Transportelemente und das Entladen der Waren aus dem Transportelementen.

Ein manuelles Befüllen von bereitgestellten leeren Transportelementen wie beispielsweise Transporttaschen erlaubt eine flexible, schonende Handhabung verschiedener Waren, ist jedoch langsam und kostenintensiv.

So ist es aus dem Stand der Technik bekannt, dass für den Transport von Waren bzw. Artikeln, nachfolgend vereinfacht Fördergüter genannt, Hängefördereinrichtungen mit Transporttaschen eingesetzt werden.

Die Publikationsschriften DE 102004018569 A1 und US 11465847 B2 beschreiben beispielsweise eine Hängefördereinrichtung mit einer Mehrzahl von zusammenklappbaren Förder- bzw. Sammeltaschen zum Aufnehmen und sortierenden Sammeln von Objekten, insbesondere von Kleidungsstücken. Die Sammeltasche umfasst ein schwenkbares Rahmengestell und einen am Rahmengestell hängenden Taschenbeutel. Die Sammeltasche ist über einen am Rahmengestell angebrachten Hakenverbindungselement an der Hängefördereinrichtung bzw. an einem Laufwagen aufgehängt.

Der Vorteil von Fördertaschen liegt darin, dass diese faltbar ausgebildet sind. Dadurch lässt sich das Aufnahmefach durch Zusammenfalten komprimieren. Die Fördertaschen erlauben auf diese Weise gegenüber beispielsweise starren Kisten und Behältern eine platzsparende Güterlogistik. So lassen sich leere Fördertaschen mit komprimiertem Aufnahmefach platzsparend lagern oder fördern. Die Aufnahmefächer brauchen erst für den Warentransport oder die Warenlagerung raumeinnehmend expandiert zu werden.

Die EP 2418160 B1 zeigt eine andere Beladestation für in einer Hängeförderanlage transportierte Transporttaschen. Die Transporttaschen weisen einen an einem Förderelement aufgehängten Rahmenbügel auf, an welchem zwei Enden einer flexiblen Stoffbahn befestigt sind und einen Beutel bilden. Unterhalb des Aufhängehakens des Beutels ist eine Druckplatte angeordnet. In der Beladestation ist eine Kufe angeordnet, welche bei der Bewegung einer Transporttasche durch die Beladestation die Druckplatte und damit auch die Transporttasche von einer Orientierung quer zur Förderrichtung in eine Orientierung parallel zur Förderrichtung drückt und über den Verlauf der Kufe in dieser Orientierung hält. Die Form des Aufhängehakens ist so gewählt, dass dieser dabei im Traghaken des Förderelements weg von einem Minimum der potenziellen Energie nach oben gedrückt wird. Gleichzeitig wird der Rahmenbügel auch senkrecht zur Förderrichtung nach aussen gedrückt, und nimmt eine Lage an, in welcher der Beutel nach oben hin geöffnet ist. In dieser Position kann die Transporttasche von der Seite her durch die obere Öffnung befüllt werden. Nach dem Verlassen des Bereichs der Kufe gleitet der Aufhängehaken auf dem Traghaken wieder zurück zum Minimum der potenziellen Energie, und die Tasche schwenkt zurück in eine Orientierung quer Förderrichtung.

Die Publikationsschrift CH 720950 A1 beschreibt eine Fördertasche für eine Hängeförderanlage zum hängenden Fördern eines Fördergutes entlang einer Förderbahn, wobei die Fördertasche in Förderrichtung betrachtet eine vordere Taschenwand und eine der vorderen Taschenwand nachlaufende hintere Taschenwand aufweist, welche durch einen Taschenboden miteinander verbunden sind, und die vordere und hintere Taschenwand zusammen mit dem Taschenboden ein nach oben durch eine Taschenöffnung offenes Hauptaufnahmefach begrenzen. Die Fördertasche enthält ferner eine Halteeinrichtung zum klemmenden Aufnehmen eines flächigen Förderguts an der Aussenseite von mindestens einer der Taschenwände, insbesonders der Rückwand.

Die DE 102004018569 B4 zeigt eine weitere Vorrichtung zum Beladen von Transporttaschen in einer Hängeförderanlage. Die Transporttaschen weisen einen quer zur Förderrichtung an einem Förderelement aufgehängten Rahmenbügel auf, welcher eine obere Öffnung der Tasche definiert. Eine an zwei Enden an dem Rahmenbügel befestigte flexible Stoffbahn bildet einen Beutel zur Aufnahme von Stückgutelementen. Seitenwandungen schliessen nur einen unteren Teil der Seiten des Beutels, so dass seitliche Einwurföffnungen verbleiben. Beim Bewegen der Transporttaschen entlang des Förderwegs durch die Vorrichtung bewegen entsprechend ausgestalteten Kulissen den im leeren Zustand der Transporttasche senkrecht hängenden Rahmenbügel in eine waagrechte Position, in welcher die seitlichen Einwurföffnungen maximal geöffnet sind. Die Artikel können nun manuell durch die seitlichen Öffnungen in die Tasche geworfen werden. Eine automatische Befüllung ist nicht möglich, da die oberen Öffnungen der Taschen wegen der Laufschiene des Fördersystems nicht zugänglich sind.

Die WO 2018142242 A1 zeigt eine Fördereinheit zum hängenden Transport von Transportelementen in einem Fördersystem, insbesondere einem schienengeführten Fördersystem oder einem Förderkettensystem. Die Fördereinheit umfasst einen an einem Förderelement, insbesondere einem Laufwagen oder einem Förderkettenglied, angebrachten Traghaken, ein Transportelement, und einen am Transportelement angebrachten Aufhängehaken, wobei der Aufhängehaken im Traghaken hängend gelagert ist. Der Traghaken ist derart ausgestaltet, dass der Aufhängehaken im Traghaken zwei stabile Positionen einnehmen kann. Der Aufhängehaken in einer ersten stabilen Position ist gegenüber dem Aufhängehaken in einer zweiten stabilen Position um einen Winkel gedreht. Das Fördersystem ist mit Wirkanordnungen zur aktiven Drehung der Transporttasche ausgestaltet.

Moderne Transportelemente wie zum Beispiel Transporttaschen in Hängeförderanlagen können mehrere Aufnahmeplätze für Fördergüter aufweisen. Die mehreren Aufnahmeplätze können unterschiedlich gestaltet sein, je nachdem welches Fördergut gefördert werden soll. Bei der seitlichen Befüllung der Transporttaschen von oben mit Fördergütern stellt sich das Problem, dass die Transporttaschen in der richtigen Ausrichtung zur Beladeposition gebracht werden sollten, um die Befüllung effizient durchführen zu können. Selbst für eine Befüllung der Transporttaschen manuell, also von Hand, sollte die Transporttaschen korrekt ausgerichtet an die Beladeposition herangeführt werden.

So können Transpottaschen mit mehreren Aufnahmefächern ausgestattet sein, welche sich an verschiedenen Seitenwände der Transporttaschen befinden können. Zum Befüllen der einzelnen Aufnahmefächer mit Fördergüter ist es nun notwendig, dass die Transpottasche vor Erreichen der Beladeposition in die richtige Ausrichtung gebracht wird, so dass das Fördergut in das vorgesehenes Aufnahmefach eingeführt werden kann. Wenn die Transpottasche in einer falschen Ausrichtung zur Beladeposition gefördert wird, ist es notwendig, die Transporttasche manuell in die richtige Position zu drehen, welches die Beladung verzögert oder zu Fehlem bei der Beladung der Transporttaschen führen kann.

Unterschiedliche Fördergüter können nicht in den gleichen Transporttaschen gefördert werden, da das Volumen oder das Gewicht oder die Beschaffenheit der Fördergüter deutlich unterschiedlich ist. So eignen sich beim hängenden Fördern von Fördergüter die Transporttaschen mit Gewebebeuteln, sogenannte «Soft Pouches», nur für einen Teil der Fördergüter. Für den Rest der Güter müssen andere Lösungen zur Förderung bereitgestellt werden.

Es besteht allgemein das Bedürfnis nach Fortschritten in diesem Gebiet der Technik.

### Darstellung der Erfindung

Es ist eine Aufgabe der Erfindung, Fördereinheiten zum hängenden Transport von Fördergütern in einer Förderanlage, insbesondere einer schienengeführten Förderanlage, und ein Verfahren bereitzustellen, welche eine einfache und sichere Möglichkeit gewährleistet auch unterschiedlichste Güter mittels dieser Fördereinheiten fördern zu können.

Eine andere Aufgabe der Erfindung ist es, eine entsprechende Förderanlage mit diesen Fördereinheiten zur Verfügung zu stellen.

Diese und andere Aufgaben werden gelöst durch eine erfindungsgemässe Förderanlage bzw. Verfahren gemäss den unabhängigen Ansprüchen. Weitere Ausführungsformen und Weiterbildungen sind in den abhängigen Ansprüchen gegeben.

Erfindungsgemäss werden die nachfolgend beschriebenen Fördereinheiten zum hängenden Transport von Fördergütern in einer Förderanlage, insbesondere einer schienengeführten Förderanlage eingesetzt. Die Fördereinheiten umfassen jeweils ein Förderelement, insbesondere einen Laufwagen, mit angebrachtem Traghaken sowie ein als Transporttasche ausgebildetes Transportelement, welches mit einer Rahmenstruktur ausgestattet ist. An der Rahmenstruktur ist ein Aufhängehaken angebracht. Der Aufhängehaken ist im Traghaken des Förderelementes hängend gelagert.

Die Transporttaschen in Fördererrichtung jeweils eine vorlaufende und eine nachlaufende Taschenwand aufweisen, welche über einen Taschenbodenabschnitt miteinander verbunden sind, wodurch ein Aufnahmeraum ausbildet wird, in dem die Fördergüter gefördert werden können.

Gemäss Erfindung sind die Transportelemente von mindestens zwei Fördereinheiten der erfindungsgemässen Förderanlage als unterschiedlich ausgestaltete Transporttaschen ausgeführt. Die unterschiedlich ausgestalteten Transporttaschen werden also in einer gemeinsamen Förderanlage betrieben.

Die Förderanlage kann mit zwei, drei, vier oder mehr als vier Typen von Fördereinheiten mit jeweils unterschiedlich ausgestalteten Transportelementen, insbesondere unterschiedlich ausgestalteten Transporttaschen betrieben werden.

Zwei Typen von Fördereinheiten mit unterschiedlich ausgestalteten Transporttaschen werden nachfolgend erste und zweite Fördereinheiten genannt. Die Förderanlage enthält nun insbesondere jeweils eine Mehrzahl von mindestens ersten und zweiten Fördereinheiten.

Die unterschiedlich ausgestalteten Transporttaschen werden zur Entladung der Fördergüter jeweils einer taschenspezifischen Entladevorrichtung zugeführt und entladen. So enthält die Förderanlage insbesondere mindestens eine und ganz besonders mehrere erste Entladevorrichtungen zum Entladen von ersten Fördereinheiten. Ferner enthält die Förderanlage insbesondere mindestens eine und ganz besonders mehrere zweite Entladevorrichtungen zum Entladen von zweiten Fördereinheiten.

Die Entladevorrichtungen sollen insbesondere ein automatisches Entladen der Fördereinheiten ermöglichen. Die Entladevorrichtungen werden hierzu insbesondere über eine Steuerungseinrichtung gesteuert.

In einer vorteilhaften Ausführungsart ist die Fördereinheit mit einer Förder- bzw. Transporttasche ausgestattet, die eine Rahmenstruktur aufweist, welche z. B. aus einem Drahtmaterial geformt ist. So kann die Transporttasche sowohl der ersten als auch der zweiten Fördereinheit eine solche Rahmenstruktur aufweisen.

Die Rahmenstruktur ist insbesondere dazu ausgelegt, die Transporttasche durch Bewegen der Rahmenstruktur von einer Schliessstellung in eine Offenstellung und umgekehrt zu überführen. Die Rahmenstruktur bildet in der Offenstellung der Transporttasche insbesondere eine obere Taschenöffnung aus.

In der Schliessstellung ist die Transporttasche insbesondere durch Zusammenführen von vorlaufender und nachlaufender Taschenwand kompakt geschlossen. In der Offenstellung bildet die Transporttasche insbesondere durch Auseinanderführen von vorlaufender und nachlaufender Taschenwand ein Aufnahmefach für ein Fördergut sowie eine obere Taschenöffnung aus.

Gemäss einer Weiterbildung können die mindestens zwei Fördereinheiten mit unterschiedlich ausgestalteten Transporttaschen, die in einer gemeinsamen Förderanlage betrieben werden, zur Beladung mit Fördergütern jeweils einer taschenspezifischen Beladevorrichtung zum Beladen zugeführt werden.

So enthält die Förderanlage gemäss dieser Weiterbildung mindestens eine oder mehrere erste Beladevorrichtungen zum Beladen von ersten Fördereinheiten mit Fördergütern. Femer enthält die Förderanlage mindestens eine oder mehrere zweite Beladevorrichtungen zum Beladen von zweiten Fördereinheiten mit Fördergütern.

Die Beladevorrichtungen sollen insbesondere ein automatisches Beladen der Fördereinheiten mit Fördergütern ermöglichen. Die Beladevorrichtungen werden hierzu insbesondere über eine Steuerungseinrichtung gesteuert.

Gemäss einer Ausführungsvariante weist die Transporttasche der ersten Fördereinheit eine vorlaufende oder nachlaufende, insbesondere ein vor- und nachlaufende Taschenwand aus einem biegefesten Material auf.

Gemäss einer Weiterbildung weist die vor- und/oder nachlaufende Taschenwand der ersten Fördereinheit ein Taschenwandmaterial auf, welches aus einem Kunststoffmaterial oder einem Hohlkammermaterial oder einem Verbundmaterial oder einem Mehrschichtmaterial oder einem Metall besteht.

Gemäss dieser Ausführungsvariante weist die Transporttasche der zweiten Fördereinheit eine vorlaufende oder nachlaufende, insbesondere ein vor- und nachlaufende Taschenwand aus einem biegeschlaffen Material auf.

Gemäss einer Weiterbildung weist die vor- und/oder nachlaufende Taschenwand der zweiten Fördereinheit ein Taschenwandmaterial auf, welches aus einem Gewebe, einem Textilverbundstoff bzw. textilen Flächengebilde, wie Vlies oder Filz, einem Folienmaterial, einem Gummi oder einem Silikongummi besteht.

Vorteilhafterweise weist das Förderelement der Fördereinheit ein Identifikationsmittel auf, insbesondere auf dem Laufwagen.

In einer Weiterbildung sind die Transporttaschen der Fördereinheiten mit unterschiedlich ausgestalteten Identifikationsmittel ausgestattet.

In einer Weiterbildung der Fördereinheiten weisen die unterschiedlich ausgestalteten Transporttaschen unterschiedliche Aufnahmevolumen für Fördergüter auf.

Mit Vorteil weisen die Transportelemente der Fördereinheiten vertikale Drehachsen auf, um welche die unterschiedlich ausgestalteten Transporttaschen drehbar sind. Die Drehachse liegt insbesondere in der Mittelängsachse der Fördereinheit.

Erfindungsgemäss werden die Fördereinheiten mit den unterschiedlich ausgestalteten Transporttaschen in einer gemeinsamen Förderanlage betrieben Gemäss einer Weiterbildung werden die Fördereinheiten mit unterschiedlich ausgestalteten leeren Transporttaschen unterschiedlichen Leertaschenpuffern zugeführt.

So enthält die Förderanlage gemäss dieser Weiterbildung mindestens einen ersten Leertaschenpuffer zum (Zwischen-)speichern von leeren, ersten Fördereinheiten. Ferner enthält die Förderanlage insbesondere mindestens einen zweiten Leertaschenpuffer zum (Zwischen-)speichern von zweiten Fördereinheiten.

Die erfindungsgemässe Förderanlage zum hängenden Transport von Fördergüter, entlang von Förderschienen, insbesondere eine schienengeführte Förderanlage weist wie erwähnt mindestens zwei Fördereinheiten mit unterschiedlich ausgestalteten Transporttaschen auf.

Gemäss einer Weiterbildung können in der Förderanlage die unterschiedlich ausgestalteten Transporttaschen zur Beladung mit Fördergütern, jeweils einer taschenspezifischen Beladevorrichtung zugeführt werden.

Ferner können in der Förderanlage die unterschiedlich ausgestalteten Transporttaschen zur Entladung der Fördergüter, jeweils einer taschenspezifischen Entladevorrichtung zugeführt werden.

In einer vorteilhaften Ausführungsform ist die Förderanlage bzw. die mindestens eine Entladevorrichtung so ausgestattet, dass die Entladung bzw. Entleerung der Transporttaschen nach unten durch den geöffneten Taschenboden bzw. Taschenbodenabschnitt erfolgt.

Die mindestens erste oder zweite oder die erste und zweite Entladevorrichtung können entsprechend zur Entladung der entsprechenden Fördereinheiten durch den Taschenboden bzw. Taschenbodenabschnitt ausgebildet sein.

Ist die Transporttasche eine «Soft Pouch», deren Aufnahmefach durch eine flächenförmigen Materialbahn ausgebildet wird, so kann diese nach unten entleerbar ausgebildet sein. Hierzu kann z. B. vorgesehen sein, dass das eine Ende der flächenförmigen Materialbahn von der Rahmenstruktur lösbar angeordnet ist. Hierzu kann z. B. eine Trageschlaufe, über welche die flächenförmigen Materialbahn an der Rahmenstruktur befestigt ist, von der Rahmenstruktur abnehmbar ausgebildet sein. So lässt sich die Trageschlaufe z. B. über einen Klett- oder Druckknopfverbindung reversibel öffnen und verschliessen. Alternativ kann die flächenförmige Materialbahn z. B. über eine Trageschlaufe an einer von der Rahmenstruktur wegnehmbaren Tragestange befestigt sein. Auf diese Weise lässt sich die Materialbahn unter Freigabe einer bodenseitigen Entladeöffnung wegschwenken. Die Tragestange kann z. B. in der Rahmenstruktur eingehängt sein.

Ist die Transporttasche eine «Hard Pouch», so kann diese eine verschliessbare Taschenbodenklappe aufweisen, welche eine bodenseitige Entladeöffnung freigibt.

In einer Weiterbildung ist die Förderanlage mit einer Mehrzahl von schaltbaren Weichen ausgestattet. Die Weichen werden insbesondere über die genannte Steuerungseinrichtung geschaltet.

Eine Weiche kann insbesondere dazu dienen, um entlang verschiedener Förderschienen getrennt geförderte erste und zweite Fördereinheiten mit unterschiedlich ausgebildeten Transporttaschen auf einer gemeinsamen Förderschiene zusammenzuführen und gemeinsam (weiter) zu fördern. Ferner kann eine Weiche dazu dienen, um auf einer Förderschiene gemeinsam geförderte erste und zweite Fördereinheiten mit unterschiedlich ausgebildeten Transporttaschen auf verschiedene Förderschienen zu leiten um diese voneinander getrennt zu fördern.

Die Förderelemente werden während der Förderung der Fördergüter über die Laufschienen den Weichen zugeführt, so dass die Fördergüter mit Hilfe der schaltbaren Weichen durch die Förderanlage geführt werden können, um ihr Ziel erreichen können.

Gemäss einer Weiterbildung ist die Rahmenstruktur aus einem gebogenen Drahtmaterial geformt.

Die Rahmenstruktur besteht insbesondere aus einem offenen oder geschlossenen Bügel oder enthält einen solchen. Der Bügel bildet in der Offenstellung der Transporttasche insbesondere eine obere Taschenöffnung aus.

Die Rahmenstruktur hat insbesondere auch die Funktion eines Traggestells bzw. Tragrahmens, an welchem insbesondere mindestens eine Taschenwand befestigt ist. Die Taschenwand wird so vom Traggestell bzw. Tragrahmen getragen.

In einer Weiterbildung sind die unterschiedlich ausgestalteten Transporttaschen über die Rahmenstruktur mit dem Transportelement verbunden.

Der Aufhängehaken kann ein Teil, insbesondere integraler Teil der Rahmenstruktur sein. Der Aufhängehaken kann ein offener oder geschlossener Haken sein. Ein geschlossener Haken kann z. B. eine Öse bzw. einen ring- oder schlaufenförmigen Körper umfassen.

Bevorzugt weist die Rahmenstruktur einen Aufhängehaken in Form einer Aufhängeöse auf.

Gemäss einer Weiterbildung der Erfindung weisen die mindestens zwei Fördereinheiten die gleichen, insbesondere die identischen Aufhängehaken auf.

In einer Weiterbildung besteht das insbesondere flexible Transporttaschenwandmaterial der Transporttasche bzw. der vorlaufenden und/oder nachlaufenden Taschenwand der zweiten Fördereinheit aus einem Gewebe, einem Textilverbundstoff bzw. textilen Flächengebilde, wie Vlies oder Filz, einem Folienmaterial, einem Gummi oder einem Silikongummi. Das flexible, insbesondere biegeschlaffe Material der Transporttaschenwand wird mittels eines Bügels, wie Drahtbügels als Teil der Rahmenstruktur in Form gebracht, bzw. gestützt.

In einer Weiterbildung besteht das Transporttaschenwandmaterial der Transporttasche bzw. der vorlaufenden und/oder nachlaufenden Taschenwand der ersten Fördereinheit aus einem Kunststoffmaterial oder einem Hohlkammermaterial oder einem Verbundmaterial oder einem Mehrschichtmaterial oder einem Metall. Die Teile der Transporttaschenwände, wie vorlaufende und/oder nachlaufende Taschenwand können über bewegliche Elemente, z. B. in Form von Scharnieren oder Haken miteinander verbunden sein. Die Rahmenstruktur kann mindestens einen Teil dieser beweglichen Elemente ausbilden.

In einer Weiterbildung weist die Fördereinheit ein Identifikationsmittel auf, insbesondere auf dem Laufwagen.

In einer Weiterbildung weisen die unterschiedlich ausgestalteten Transporttaschen jeweils unterschiedliche Identifikationsmittel auf.

In einer Weiterbildung weisen die unterschiedlich ausgestalteten Transporttaschen unterschiedliche Aufnahmevolumen für Fördergüter auf.

In einer Weiterbildung weisen die unterschiedlich ausgestalteten Transporttaschen eine vertikale Drehachse auf, um welche die Transporttaschen drehbar sind.

In einer Weiterbildung weisen die unterschiedlich ausgestalteten Transporttaschen eine vertikale Drehachse auf, um welche die Transporttaschen jeweils um 90° (Winkelgrad) nach links und nach rechts drehbar sind.

In einer Weiterbildung können die Transporttaschen in Förderrichtung betrachtet, nach rechts gedreht werden, um beladen zu werden. In einer Weiterbildung können die Transporttaschen in Förderrichtung betrachtet, nach links gedreht werden, um beladen zu werden.

In einer bevorzugten Ausgestaltung der Erfindung sind die Transporttaschen bzw. über ihre Rahmenstruktur an dem Traghaken des Laufwagens schwenkbar befestigt.

In einer weiteren Ausgestaltung der Erfindung sind die Transporttaschen mit einem schwenkbaren Bügel ausgestattet, der zur Befüllung der Transporttaschen und insbesondere zum Öffnen der Transporttasche, aufgeschwenkt wird. Dieser Bügel ist insbesondere Teil der Rahmenstruktur oder bildet diese aus.

In einer bevorzugten Ausgestaltung der Erfindung besteht die eine, der unterschiedlich ausgestalteten Transporttaschen der ersten Fördereinheit, aus zwei formstabilen Platten, die als vorlaufende und nachlaufende Taschenwand dienen. Diese sind insbesondere über ein Schwenkscharnier am Taschenboden miteinander schwenkbar verbunden.

In einer bevorzugten Ausgestaltung der Erfindung sind der Laufwagen und/oder die Transporttaschen mit Identifikationsmitteln ausgestattet, damit sie durch mindestens eine Detektionsvorrichtung in der Förderanlage eindeutig identifiziert werden können.

In einer Weiterbildung umfasst die Förderanlage zum hängenden Transport von Fördergütern entlang von Förderschienen, insbesondere eine schienengeführte Förderanlage mindestens einen Pufferspeicher bzw. Zwischenpufferspeicher. Der Zwischenpufferspeicher dient der Zwischenspeicherung von befüllten Fördereinheiten.

In einer Weiterbildung umfasst die Förderanlage zum hängenden Transport von Fördergütern entlang von Förderschienen, insbesondere eine schienengeführte Förderanlage für jede der unterschiedlich ausgestalteten Transporttaschen einen Leertaschenpuffer.

Die Fördereinheiten zum hängenden Transport von Transportelementen sind, wie erwähnt in einem Fördersystem, insbesondere einer schienengeführten Förderanlage mit einem am Förderelement, insbesondere einem Laufwagen, angebrachten Traghaken versehen. Das Transportelement wiederum ist mit einem Aufhängehaken versehen, wobei der Aufhängehaken im Traghaken hängend gelagert ist.

Der Traghaken kann ein offener oder geschlossener Haken sein. Ein geschlossener Haken kann z. B. als Öse bzw. ring- oder schlaufenförmiger Körper vorliegen.

Gemäss einer Weiterbildung der Erfindung weisen die mindestens zwei Fördereinheiten die gleichen, insbesondere die identischen Traghaken auf.

Der Traghaken ist insbesondere in der Art ausgestaltet ist, dass der Aufhängehaken im Traghaken mindestens drei stabile Positionen einnehmen kann.

Hierbei ist der Aufhängehaken in einer ersten stabilen Position gegenüber dem Aufhängehaken in einer zweiten stabilen Position, d.h. bezogen auf eine zweite stabile Position des Aufhängehakens, um einen Winkel gedreht. Ferner ist der Aufhängehaken in der ersten stabilen Position gegenüber dem Aufhängehaken in einer dritten stabilen Position, d.h. bezogen auf eine dritte stabile Position des Aufhängehakens, um einen anderen Winkel als in der zweiten stabilen Position gedreht.

In der ersten stabilen Position befindet sich das Transportelement insbesondere in einer Förderstellung. In der zweiten stabilen Position befindet sich das Transportelement insbesondere in einer Belade- oder Entladestellung. In der dritten stabilen Position befindet sich das Transportelement insbesondere in einer Belade- oder Entladestellung.

"Stabile Position" bedeutet insbesondere, dass der Aufhängehaken bzw. das Förderelement mit dem Aufhängehaken in einer Ruhestellung in seiner Position bzw. Drehposition am Traghaken verharrt. "Ruhestellung" bedeutet insbesondere, dass sich die dazugehörige Fördereinheit nicht in einer Förderbewegung befindet. Dies kann z. B. an einer Be- oder Entladestation der Fall sein.

Das Verharren des Aufhängehakens in der "stabilen Position" kann ohne Fremdeinwirkung erfolgen. Dies ist insbesondere bei der ersten stabilen Position der Fall.

Das Verharren des Aufhängehakens in der "stabilen Position" kann auch durch ein von aussen auf den Aufhängehaken bzw. das Transportelement in der stabilen Position einwirkendes Anschlagelement bewirkt werden. Das Anschlagelement hält z. B. in einer Anschlagposition, in welcher das Transportelement bzw. der Aufhängehaken an das Anschlagelement anschlägt bzw. diesem ansteht, vor einem Zurückschwenken des Transportelements aus der zweiten bzw. der dritten stabilen Position in die erste stabile Position ab.

Eine weitere vorteilhafte Ausführung der Fördereinheit erfolgt dadurch, dass der Aufhängehaken in der Art zwischen der ersten stabilen Position und der zweiten stabilen Position und der dritten stabilen Position hin und her überführbar ist, wobei der Aufhängehaken konstant auf dem Traghaken aufliegt.

Das heisst, der Aufhängehaken ist derart zwischen der ersten stabilen Position und der zweiten stabilen Position sowie zwischen der ersten stabilen Position und der dritten stabilen Position hin und her überführbar, dass der Aufhängehaken konstant auf dem Traghaken aufliegt.

Die Fördereinheit enthält insbesondere ein Transportelement mit einem Aufhängehaken, wobei der Aufhängehaken durch Drehen des Transportelementes um eine Vertikale der Förderrichtung zwischen der ersten stabilen Position und der zweiten stabilen Position und der dritten stabilen Position am Traghaken hin und her überführbar ist. Der Drehwinkel beträgt insbesondere 90° (Winkelgrad).

Gemäss einer Weiterbildung der Fördereinheit bildet der Traghaken eine erste Auflagestelle, eine zweite Auflagestelle und eine dritte Auflagestelle für den Aufhängehaken auf. Der Aufhängehaken liegt in der ersten stabilen Position der ersten Auflagestelle, in der zweiten stabilen Position der zweiten Auflagestelle, und in der dritten stabilen Position der dritten Auflagestelle auf.

Zwischen der ersten Auflagestelle und der zweiten Auflagestelle sowie zwischen der ersten Auflagestelle und der dritten Auflagestelle, ist je ein Verbindungssegment, z. B. in Form eines Armabschnittes, angeordnet, auf dem der Aufhängehaken gleitend zwischen der ersten stabilen Position, der zweiten stabilen Position und der dritten stabilen Position hin und her überführbar ist.

Die erste, zweite und dritte Auflagestellen weisen am Traghaken insbesondere voneinander verschiedene räumliche Anordnungen auf. Gemäss einer Weiterbildung, ist die erste Auflagestelle in einer Projektion der Auflagestellen in einer Ebene senkrecht zur Förderrichtung insbesondere zwischen der zweiten und dritten Auflagestelle angeordnet. Die erste Auflagestelle ist in Förderrichtung insbesondere der zweiten und dritten Auflagestelle vorlaufend angeordnet.

Gemäss einer Weiterbildung entspricht in der ersten räumlichen Anordnung der ersten Auflagestelle des Traghakens die erste Position einem Minimum der potenziellen Energie des hängend gelagerten Transportelements.

Der Aufhängehaken weist in der ersten stabilen Position gegenüber der zweiten und dritten stabilen Position insbesondere eine tiefere bzw. die tiefste potentielle Energie auf.

So liegt die erste Auflagestelle und somit auch der Aufhängehaken in der ersten stabilen Position gegenüber der zweiten und dritten Auflagestelle bzw. der zweiten und dritten stabilen Position entlang einer horizontalen Förderstrecke in Schwerkraftrichtung betrachtet insbesondere auf einem tieferen Niveau.

Die erste, zweite und dritte Auflagestelle werden insbesondere durch Auflageflächen ausgebildet. Die erste, zweite und dritte Auflagestelle kann in einer horizontalen Lage des Förderelementes durch eine horizontal ausgerichtete Auflagefläche oder durch eine Vertiefung oder Mulde am Traghaken ausgebildet sein.

Die Achse der Vertiefung bzw. der Mulde verläuft bei der ersten Auflagestelle insbesondere parallel zur Förderrichtung und bei der zweiten und dritten Auflagestelle insbesondere quer bzw. senkrecht zur Förderrichtung.

Die erfindungsgemässe zweite Fördereinheit weist also insbesondere ein Transportelement mit einer ersten Transporttasche auf, die einen Tragebeutel als Aufnahmefach für Fördergüter ausbildet.

Die erfindungsgemässe zweite Fördereinheit weist also insbesondere ein Transportelement mit einer zweiten Transporttasche auf, die eine Gelenktasche als Aufnahmefach für Fördergüter ausbildet.

Gemäss einer weiteren Variante kann eine der mindestens zwei Fördereinheiten der Förderanlage auch ein Transportelement enthalten, welches als Transportgestell oder als Transportsack ausgebildet ist.

Eine Transporttasche, z. B. einer zweiten Fördereinheit, mit einem Tragebeutel zeichnet sich dadurch aus, dass die Transporttasche eine Rahmenstruktur enthält an dem die Enden einer Gewebebahn befestigt sind, welche eine Trageschlaufe ausbilden. Die Trageschlaufe bildet dabei die vor- und nachlaufende Taschenwand aus. Die Transporttasche kann mit flexiblen, wie gewebeartigen oder netzartigen Seitenwänden ausgestattet sein und so eine Transporttasche mit einen Tragebeutel ausbilden.

Eine Transporttasche, z. B. einer ersten Fördereinheit, als Gelenktasche ausgebildet zeichnet sich dadurch aus, dass die Transporttasche feste bzw. biegefeste Taschenwände, insbesondere vor- und nachlaufende Taschenwände aufweist, die gelenkartig miteinander verbunden sind. Sie kann mit flexiblen, wie gewebeartigen oder netzartigen, Seitenwänden ausgestattet sein und so eine formstabile Transporttasche ausbilden.

Eine «Soft Pouch» besteht aus flexiblem, biegeschlaffem Material wie beispielsweise Gewebematerial, somit kann ein biegeschlaffe Transporttasche auch als «Soft Pouch» bezeichnet werden. Das Material ist insbesondere flächenförmig.

Eine Fördereinheit, wie erste Fördereinheit, weist als Transportelement eine Transporttasche mit mindesten zwei Taschenwänden, wie vorlaufende und nachlaufende Taschenwand, auf, wobei diese Transporttasche mit formstabilen, biegefesten Taschenwänden ausgestattet ist. Die Taschenwände können zumindest teilweise aus einer Hohlkammerplatte bestehen. Die Taschenwände sind insbesondere biegesteif bzw. starr.

Eine Transporttasche, die aus formstabilem, festem Material besteht, wie beispielsweise Kunststoff, kann auch als «Hard Pouch» bezeichnet werden.

Fördereinheiten mit Transportelementen bestehend aus einer «Soft Pouch» oder einer «Hard Pouch», eingesetzt in einer gemeinsamen Förderanlage, haben den Vorteil, dass die «Soft Pouch» für spezielle Fördergüter genutzt werden kann, die für eine «Soft Pouch» geeignet sind, und die «Hard Pouch» für spezielle Fördergüter genutzt werden kann, die für eine «Hard Pouch» oder nur für eine «Hard Pouch» geeignet sind. So können in der gleichen (Hänge-)Förderanlage mehr verschiedenartige Fördergüter gefördert werden. Dadurch kann die Kapazität der Hängeförderanlage deutlich erweitert werden.

Die erfindungsgemässen mindestens zwei Fördereinheiten bzw. Typen von Fördereinheiten, weisen also Transportelemente auf, wobei die Transportelemente unterschiedliche Typen bzw. Arten von Transporttaschen sein können.

Die mindestens zwei Fördereinheiten weisen insbesondere Transporttaschen auf, wobei diese Transporttaschen je eine hintere Taschenwand, wie Rückwand, und eine vordere Taschenwand, wie Vorderwand, umfassen, die über einen Taschenbodenabschnitt derart flexibel miteinander verbunden sind, dass sie zwischen einem ersten Zustand, z. B. eine Offenstellung, in welcher sie ein oben offenes und von oben befüllbares Aufnahmefach ausbilden, und einem zweiten Zustand, z. B. eine Schliessstellung, in welcher sie dicht nebeneinander liegen, und eine insbesondere zusammengefaltete Transporttasche ausbilden. Diese Zustände sind insbesondere durch hin und her bewegen insbesondere einer Rahmenstruktur, wie oben beschrieben, erreichbar.

Die Rückwand zeichnet sich insbesondere dadurch aus, dass diese gegen oben in einen Tragabschnitt übergeht, an welchem der Aufhängehaken angeordnet ist. Der Tragabschnitt einer «Hard Pouch» kann insbesondere als Verlängerung der Rückwand gegen oben ausgebildet sein.

Die Transporttaschen können mit einer vorlaufenden Rückwand und nachlaufenden Vorderwand oder mit einer vorlaufenden Vorderwand und einer nachlaufenden Rückwand in Förderrichtung gefördert werden.

Eine in der Förderanlage an der Förderschiene angeordnete Drehvorrichtung zum Drehen der Transportelemente von Fördereinheiten, dreht die Transportelemente um ihre vertikale Drehachse, insbesondere zwischen der ersten, zweiten und dritten stabilen Position der Aufhängehaken am Traghaken.

Die Drehvorrichtung zeichnet sich dadurch aus, dass schaltbare Einwirkelemente so in den Weg bzw. Förderkorridor der Transportelemente einbringbar sind, dass sich die Transportelemente in Förderrichtung um ihre vertikale Achse nach rechts oder nach links drehen, bevor die Transporttasche z. B. eine Beladeposition in einer eine Beladevorrichtung enthaltenden Beladestation oder eine Entladeposition in einer eine Entladevorrichtung enthaltenden Entladestation erreichen.

Die Transportelemente stossen dabei während ihrer Förderung in Förderrichtung an die in den Förderkorridor hineinragenden Einwirkelemente an, wodurch die Drehung ausgelöst wird. Die Einwirkelemente können Stäbe oder Rollen sein.

Unter "Förderkorridor" ist insbesondere ein entlang der Förderrichtung führender Förderraum zu verstehen, durch welchen sich die Fördereinheiten bzw. die Förderelemente der Fördereinheiten bewegen.

Die Drehvorrichtung ist entsprechend in Förderrichtung insbesondere vor einer Be- oder Entladevorrichtung angeordnet oder Teil von dieser.

Eine Beladevorrichtung kann zum Beladen der Transportelemente mit Fördergütern vorgesehen sein, wobei die Beladung mit den Fördergütern quer zur Förderrichtung des Förderelementes erfolgt, und wobei die Transportelemente vor dem Beladen in der Beladestation mit der Drehvorrichtung um ihre vertikale Achse in die zum Beladen vorgesehene Ausrichtung gedreht werden.

Eine Entladevorrichtung kann zum Entladen der Transportelemente vorgesehen sein, wobei die Entladung quer zur Förderrichtung des Förderelementes erfolgt, und wobei die Transportelemente vor dem Entladen in der Entladestation mit der Drehvorrichtung um ihre vertikale Achse in die zum Entladen vorgesehene Ausrichtung gedreht werden.

Eine erfindungsgemässe Förderanlage ist zum geführten, hängenden Transport von Fördereinheiten ausgelegt, welche mit Transportelementen in Form von Transporttaschen ausgestattet sind, die entlang einer Förderschiene geführt werden, wobei die schienengeführte Förderanlage, mit mindestens zwei unterschiedlichen ausgebildeten (ersten und zweiten) Fördereinheiten ausgestattet ist.

Die Transporttasche für Fördereinheiten kann im oberen Teil des Tragrahmens einen Aufhängehaken aufweisen, der wiederum als Öse ausgebildet ist, wobei diese Öse des Aufhängehakens rechtwinklig gegenüber dem Tragrahmen der Transporttasche verdreht ist bzw. die Ebene der Öse senkrecht zur Ebene des Tragrahmens ausgerichtet ist.

Der Aufhängehaken kann auch beweglich am Tragrahmen angebracht sein. In diesem Fall sind Tragrahmen und Aufhängehaken zwei separate Teile, die sich insbesondere gegenseitig verdrehen oder verschwenken lassen können.

Die Steuerungseinrichtung steuert den ganzen Ablauf der Vorrichtungen, insbesondere der Förderanlage. So kann zusätzlich eine Steuerungszentrale mit der Steuerungseinrichtung in der Förderanlage vorhanden sein, die dazu ausgestattet ist, die Warenflüsse innerhalb der Förderanlage zu steuern.

Die Förderanlage kann mindestens eine Stopp- und Freigabevorrichtung enthalten, zum Anhalten der Fördereinheiten entlang der Förderstrecke und dem Freigeben der Fördereinheiten für den einzelnen Weitertransport z. B. zu einer Be- oder Entladevorrichtung hin. Die Stopp- und Freigabevorrichtung kann stromaufwärts vor einer Be- oder Entladestation bzw. stromaufwärts vor einer der Be- oder Entladestation zugeordneten Drehvorrichtung angeordnet sein.

Die Steuerungseinrichtung steuert die Stopp- und Freigabevorrichtung, um die Fördereinheiten einerseits anzuhalten zu können, aber auch andererseits die Fördereinheiten für die Förderung einzeln oder in Gruppen frei geben zu können.

Die Erfindung ist für eine Förderanlage mit Aussenläufer als Laufwagen beschrieben. Selbstverständlich eignet sich die erfindungsmässige Förderanlage auch für Innenläufer als Laufwagen der Förderanlage, womit diese Erfindung auch eine Innenläuferanlage mit umfasst.

Die Fördereinheiten können verschiedene Transporttaschen für Fördergüter aufweisen, insbesondere verschiedenartig ausgestaltete Transporttaschen für unterschiedliche Arten von Fördergüter. Ein gleichartiges Transportelement kann unterschiedliche Transporttaschen aufweisen, die jeweils unterschiedliche Warentypen aufnehmen können.

Die Aufnahmeplätze bzw. die Aufnahmeräume der Transporttaschen können verschliessbar sein. Das Fördergut kann tragend gehalten gefördert werden.

Das Fördergut kann aber auch während der Förderung klemmend gehalten werden. Das Fördergut kann während der Förderung klemmend zwischen der Vorderwand und der Rückwand gehalten gefördert werden.

Mit Hilfe der Drehvorrichtung können Transporttaschen in Förderrichtung betrachtet entweder nach links oder nach rechts gedreht werden. Mittels unterschiedlicher Beladevorrichtungen können verschiedenartige Transporttaschen mit Fördergütern befüllt werden. Es können auch insbesondere verschiedenartige Aufnahmefächer mit Fördergütern beladen werden.

Die Rahmenstruktur kann einteilig sein oder mehrteilig aufgebaut sein. Die Rahmenstruktur kann wie erwähnt als Tragrahmen der Transporttasche ausgebildet sein. Der Tragrahmen ist ein synonym für die Rahmenstruktur, welche eine rahmenartige Struktur aufweist, die einerseits an den Traghaken eingehängt werden kann und andererseits einen Rahmen bildet, an dem mindestens eine Taschenwand, wie die Trageschlaufe des Taschenbeutels befestigt **ist.**

Gemäss einer Weiterbildung können die Transportelemente eines weiteren Typs von Fördereinheiten auch Transportkörbe sein, die Fördergüter befördern. So weisen Transportkörbe in der Regel Ablegestellen auf, an denen die Fördergüter abgelegt werden können. Auch diese Transportkörbe können für die Beladung oder zur Entladung gedreht und ausgerichtet werden.

Hängeförderanlagen können Teilanlagen von Förderanlagen bzw. -systemen sein. Somit sind Förderanlagen bzw. Fördersysteme übergeordnete Anlagen in denen auch Liegeförderer, Lager, Palettenlager, Hochregallager und auch Materialflussrechner umfassen.

Eine Fördereinheit besteht wie erwähnt aus einem Förderelement, insbesondere in Form eines Laufwagens, und mindestens einem Transportelement in Form einer Transporttasche, welche Fördergüter, wie Stückgüter, zum Transport aufnehmen kann.

Gemäss einer Weiterbildung der Erfindung weisen die mindestens zwei Fördereinheiten bzw. Typen von Fördereinheiten die gleichen, insbesondere die identischen Förderelemente, wie Laufwagen, auf.

Stückgüter können Waren, Artikel, Konsumgüter, Einzelteile aber auch kleinere Gebinde sein. Stückgüter unterscheiden sich deutliche von ihrer Grösse, ihrer inneren Beschaffenheit und ihrem Gewicht und ihrer Empfindlichkeit auf Druck und ihrem Handhabungsaufwand.

Die Transporttaschen können Stückgüter an Beladevorrichtungen automatisiert aufnehmen und an Entladevorrichtungen automatisiert abgeben. Die befüllten Transporttaschen werden insbesondere automatisch von den Beladvorrichtungen zu einer Sortiervorrichtung hin gefördert. Nach dem Sortieren werden die Transporttaschen, die zu einem Auftrag gehören, zu dem Abgabeziel hin gefördert. Die Transporttaschen werden mittels Weichen gesteuert durch die Förderanlage geführt, um ihr vorbestimmtes Abgabeziel zu erreichen. Die Weichen werden mittels einer übergeordneten Steuerungseinrichtung so angesteuert, dass die Transporttasche ihr Abgabeziel erreicht. Das Abgabeziel ist insbesondere eine Abgabe- bzw. Entladestation.

Am Abgabeziel bzw. an der Entladestation kann eine Entladevorrichtung für weiche, biegeschlaffe Transporttaschen vorhanden sein, die auch «Soft Pouches» genannt werden. Oder am Abgabeziel bzw. an der Entladestation kann eine Entladevorrichtung für feste, biegesteife Transporttaschen vorhanden sein, die auch «Hard Pouches» genannt werden. Die Transporttaschen werden an den Entladevorrichtungen entladen, wobei das Fördergut die Transporttasche verlässt.

Am Abgabeziel bzw. an der Entladestation können aber auch zwei insbesondere unterschiedliche Entladevorrichtungen vorhanden sein, eine für weiche, biegeschlaffe Transporttaschen, wie «Soft Pouches» und eine für feste, biegesteife Transporttaschen, wie «Hard Pouches», so dass beide Transporttaschenarten an einem Abgabeziel bzw. an einer Abgabe- bzw. Entladestation entladen werden können.

Ein wesentlicher Aspekt der Erfindung betrifft eine Förderanlage, die wenigstens eine Hängeförderanlage umfasst, welche mindestens eine Fördereinheit zur Förderung von Fördergütern einsetzt, wie sie oben beschrieben ist. Die Förderanlage kann darüber hinaus beispielsweise eine Förderstrecke, Puffer für leere Fördereinheiten, Antriebseinheiten für die Fördereinheiten, Stoppvorrichtung für Fördereinheiten, Sortiersysteme wie beispielsweise einen Matrixsortierer, schaltbare Weichen, Pufferspeicher, Beladestationen, Entladestationen, Messstation für Fördereinheiten bzw. Förder- bzw. Transporttaschen, Umlaufförderer, Palettiervorrichtungen, Speditionen, Versandplätze, Identifikationsvorrichtungen und Steuerungseinrichtungen aufweisen.

Die Erfindung betrifft auch ein Verfahren zum Betreiben einer vorgenannten Förderanlage. Das Verfahren zeichnet sich durch das gleichzeitige Transportieren bzw. Fördern von mindestens zwei Fördereinheiten mit unterschiedlich ausgestalteten Transporttaschen entlang einer gemeinsamen Förderbahn der Förderanlage aus.

In einer Weiterbildung betrifft das Verfahren das Zuführen der mindestens zwei Fördereinheiten an unterschiedliche, taschenspezifische Leertaschenpuffer.

In einer Weiterbildung betrifft das Verfahren das Beladen der mindestens zwei Fördereinheiten an unterschiedlichen, taschenspezifischen Beladevorrichtungen.

In einer Weiterbildung betrifft das Verfahren das Entladen der mindestens zwei Fördereinheiten an unterschiedlichen, taschenspezifische Entladevorrichtungen.

Gemäss einer Weiterbildung des Verfahrens werden getrennt geförderte erste und zweite Fördereinheiten mit unterschiedlich ausgebildeten Transporttaschen nach dem Beladen an den Beladevorrichtungen über eine Weiche auf einer gemeinsamen Förderschiene zusammengeführt und gemeinsam weiter gefördert.

Gemäss einer Weiterbildung des Verfahrens werden gemeinsam auf einer Förderschiene geförderte erste und zweite Fördereinheiten mit unterschiedlich ausgebildeten Transporttaschen mittels einer geschalteten Weiche auf verschiedene Förderschienen geleitet und voneinander nach Fördereinheiten-Typ getrennt zu den Entladevorrichtungen bzw. zu den die Entladevorrichtungen enthaltenden Abgabebereiche gefördert. D.h., die ersten Fördereinheiten werden im Anschluss an die Weiche insbesondere auf einer ersten Förderschiene und die zweiten Fördereinheiten werden auf einer zweiten Förderschiene weitergefördert. Nachfolgend wird der Erfindungsgegenstand anhand von Ausführungsbeispielen, welche in den beiliegenden Figuren dargestellt sind, näher erläutert.
- Figur 1: zeigt eine Fördereinheit in Draufsicht auf die Rückwand, bestehend aus einem Laufwagen und einem Transportelement in Form von einer Transporttasche mit biegefesten Seitenwänden.
- Figur 2: zeigt die gleiche Fördereinheit wie in Figur 1 in Seitenansicht, die in einer Hängeförderanlage eingesetzt ist, bestehend aus einem Laufwagen und einem Transportelement in Form von einer Transporttasche mit biegefesten Seitenwänden.
- Figur 3: zeigt eine Fördereinheit in Draufsicht, bestehend aus einem Laufwagen und einem Transportelement in Form von einer Transporttasche mit biegeschlaffen Seitenwänden.
- Figur 4: zeigt die gleiche Fördereinheit wie in Figur 3 in Seitenansicht, die in einer Hängeförderanlage eingesetzt ist, bestehend aus einem Laufwagen und einem Transportelement in Form von einer Transporttasche mit biegeschlaffen Seitenwänden.
- Figur 5: zeigt eine weitere Fördereinheit in isometrischer Ansicht, mit einem Transportelement in Form eines Traggestells.
- Figur 6: zeigt eine Förderstrecke in Seitensicht, in der verschiedenartige Fördereinheiten eingesetzt werden, solche mit biegesteifen Förder- bzw. Transporttaschen und solche mit biegeschlaffen Förder- bzw. Transporttaschen.
- Figur 7: zeigt schematisch eine Förderanlage, in welcher die Fördereinheiten für die Förderung von Fördergüter eingesetzt werden.
- Figur 8: zeigt ebenfalls eine schematische Förderanlage mit einem anderen Design, in welcher die Fördereinheiten für die Förderung von Fördergüter eingesetzt werden.

Die nachfolgend beschriebenen Ausführungsbeispiele stehen lediglich beispielhaft für den Erfindungsgegenstand und haben keine beschränkende Wirkung. Grundsätzlich sind in den Figuren gleiche Teile mit gleichen Bezugszeichen versehen.

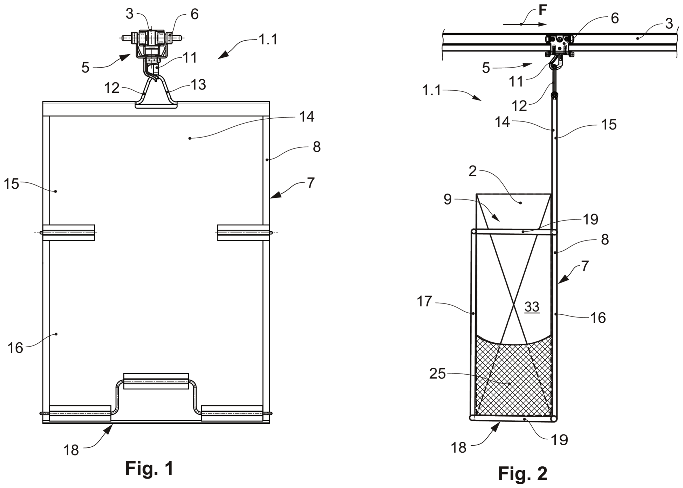

Eine erste mögliche Ausführungsform einer erfindungsgemässen Fördereinheit 1.1 ist in **Figur 1** und **Figur 2** dargestellt. Ein Transportelement 7 in Form einer Transporttasche 15 hat einen Aufhängehaken 12, der in einen Traghaken 11 eines Förderelements 5 eingehängt ist. Die genannten Bauteile bilden die Fördereinheit 1.1 aus. Die Fördereinheit 1.1 ist, wie weiter unten noch erläutert, eine so genannte «Hard Pouch».

Das Förderelement 5 ist im gezeigten Beispiel ein Laufwagen 6 einer Hängeförderanlage 100, analog zu der Anlage wie sie beispielsweise in der WO 2016/030275 A1 der Anmelderin offenbart ist. Zum besseren Verständnis ist der Laufwagen 6 in Figur 2 auf einer Laufschiene 3 einer Förderanlage 100 dargestellt, wo er sich in eine vorgesehene Förderrichtung F bewegt.

Die Transporttasche 15 umfasst ein Traggestell bzw. Rahmenstruktur 8, eine Rückwand 16, einen Taschenbodenabschnitt 18 sowie eine Vorderwand 17, die an den anstossenden Kanten schwenkbar miteinander verbunden sind. Rückwand 16, Vorderwand 17 und Taschenbodenabschnitt 18 sind stabil bzw. biegesteif ausgestaltet, und können beispielsweise aus einem geeigneten Plastikmaterial gefertigt sein, wie einer Hohlkammerplatte. Die flexibel ausgestaltete Seitenwand 25 verbindet die Rückwand 16, Vorderwand 17 und den Taschenbodenabschnitt 18 in einem unteren Bereich, so dass die Transporttasche 15 einen Behälter mit einem Aufnahmeraum 33 ausbildet. Der Behälter bildet eine obere Taschenöffnung 9 aus, durch die mindestens ein Fördergut 2 geladen werden kann. Im gezeigten Beispiel sind die Seitenwände 25 aus einem feinmaschigen Netz gefertigt. Möglich ist auch die Verwendung eines flexiblen, insbesondere flächenförmigen Textilmaterials. Die Seitenwände 25 sind so ausgestaltet, dass sie bei einem Zusammenfalten der Transporttasche 15 wie unten beschrieben ebenfalls zusammengefaltet werden können.

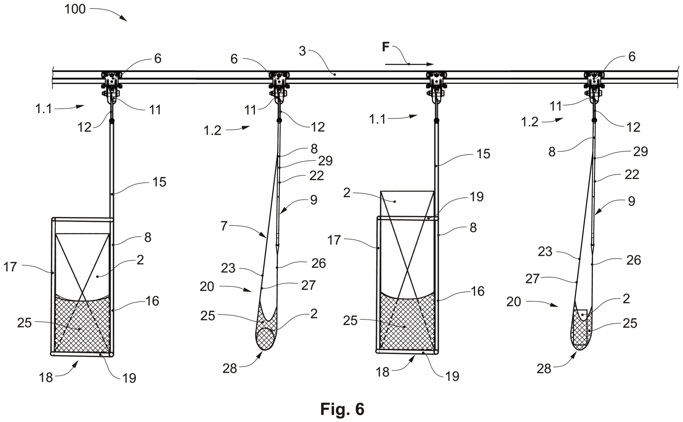

Gemäss Figur 2 und 6 bildet in Förderrichtung F betrachtet die Rückwand 16 der Transporttasche 15 die vorlaufende Taschenwand und die Vorderwand 17 die nachlaufende Taschenwand. Die Transporttasche 15 kann allerdings auch um 180° gedreht angeordnet sein, so dass die Rückwand 16 die nachlaufende Taschenwand und die Vorderwand 17 die vorlaufende Taschenwand ausbildet.

Zwischen Rückwand 16 und Vorderwand 17 sind auf jeder Seite zwei schwenkbare Distanzhalter 19 angeordnet, die zu einem, insbesondere geschlossenen Bügel, wie Drahtbügel, miteinander verbunden sind bzw. Teil eines Bügels bzw. Drahtbügels sind. Die Distanzhalter 19 beabstanden im geöffneten Zustand der Transporttasche 1.1 die Rückwand 16 von der Vorderwand 17 in einem oberen Bereich. Die Distanzhalter 19 sind im Wesentlichen parallel zum Taschenbodenabschnitt 18 angeordnet und gleich lang wie der Taschenbodenabschnitt 18, so dass die Rückwand 16 im Wesentlichen parallel zur Vorderwand 17 liegt und somit entsprechend die Vorderwand 17, der Distanzhalter 19, die Rückwand 16 und der Taschenbodenabschnitt 18 ein Parallelogramm bilden. Im aufgeklappten Zustand bilden die Rückwand 16, die Vorderwand 17 und der Taschenbodenabschnitt 18 ein Aufnahmeraum 33 für Fördergüter aus. Im unbeladenen Zustand lässt das Gewicht von Vorderwand 17 und Taschenbodenabschnitt 18 die Vorderwand 17 nach unten schwenken, so dass die Transporttasche 15 in einen zweiten Zustand übergeht, in welchem Vorderwand 17 und Rückwand 16 nahe beieinanderliegen, insbesondere einander anliegen. In dieser Konfiguration kann die Transporttasche 15 platzsparend in einer Förderanlage 100 aufbewahrt werden, indem die Fördereinheiten 1.1 auf einer Laufschiene 3 bündig hintereinander aufgereiht werden.

Durch Anheben der Vorderwand 17 und/oder des Taschenbodenabschnitts 18 gegenüber der Rückwand 16 kann die Transporttasche 15 von dem zweiten, zusammengefalteten Zustand in einen ersten, entfalteten Zustand überführt werden, wie er in Figur 1 und Figur 2 gezeigt ist. Die Distanzhalter 19 bzw. der die Distanzhalter 19 enthaltende Bügel bzw. Drahtbügel bildet die nach oben gerichtete Taschenöffnung 9 aus. Die nach oben gerichtete Taschenöffnung 9 der Transporttasche 15 erreicht bei vollständig entfalteter bzw. aufgeklappter Transporttasche 1.1 die maximale Grösse.

Im gezeigten Ausführungsbeispiel ist in der Transporttasche 15 eine Fördergut 2 angeordnet, schematisch dargestellt durch ein quaderförmiges Objekt.

Die Rückwand 16 ist an ihrem oberen Ende in einen Tragabschnitt 14 über die Distanzhalter 19 bzw. Taschenöffnung 9 hinaus verlängert., Am oberen Ende der Rückwand 16 bzw. des Tragabschnittes 14 ist der Aufhängehaken 12 in Form eines Bügels, wie Drahtbügels, mit der Rückwand 16 beziehungsweise dessen Tragabschnitt 14 verbunden. Der Bügel des Aufhängehakens 12 definiert eine Orientierungs-Ebene des Aufhängehakens 12, und damit der ganzen Transporttasche 15. Der Bügel des Aufhängehakens 12 liegt insbesondere in der Ebene der Rückwand 16.

Der Traghaken 11 ist an einem von der Laufschiene 3 abgewandten unteren Ende des Laufwagens 6 angebracht. Er kann aus Metall gefertigt sein, oder aus einem geeigneten Polymermaterial, beispielsweise einem glasfaserverstärkten Thermoplast Material. Der Traghaken 11 verfügt über einen im montierten Zustand geschlossenen Bügel mit zwei Lagerungssegmenten. Bei waagrechter Lage des Laufwagens entspricht das erste Lagerungssegment dem tiefsten Punkt einer Lasche bzw. eines Armabschnittes des Traghakens 11. In der Figur 1 dargestellt befindet sich der Aufhängehaken 12 in einer ersten stabilen Position, bei welcher der Aufhängehaken in einem Minimum der potentiellen Energie in dem ersten Lagerungssegment gelagert ist. In dieser stabilen Position ist der Aufhängehaken 12 in einer Ebene quer zur Förderrichtung F ausgerichtet.

Unter dem Begriff «quer» ist in diesem Zusammenhang jede Orientierung der Aufhängehakenebene zu verstehen, bei welcher der Aufhängehaken 12 nicht in einer Ebene im Wesentlichen parallel zur Förderrichtung F liegt. Im gezeigten Beispiel liegt der Aufhängehaken 12 ebenso wie die Rückwand 16 in einer Ebene senkrecht zur Förderrichtung F. Möglich wären aber auch andere Winkel, bei welcher sich Transporttaschen 15 im leeren oder gefüllten Zustand platzsparend auf der Laufschiene hintereinander gereiht gelagert werden können.

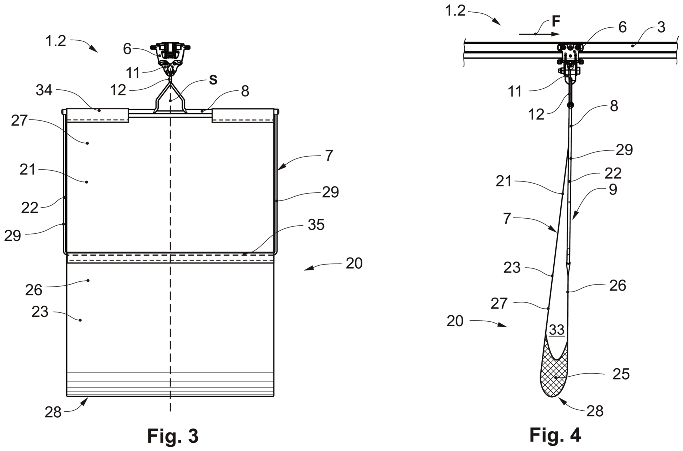

Eine zweite Fördereinheit 1.2 mit einer alternativen Ausgestaltungsform eines Transportelements 7 ist in **Figur** 3 und **Figur 4** gezeigt. Das Transportelement 7 liegt ebenfalls in Form einer Transporttasche 21 vor, welche sich jedoch im Wesentlichen von der Transporttasche 15 aus Figur 1 unterscheidet. Das Transportelement 7 ist eine sogenannte «Soft Pouch» 21. Die «Soft Pouch» 21 ist ein flexibles Transportelement 7 in Form einer an einem Traggestell bzw. einer Rahmenstruktur 8 aufgehängten Trageschlaufe 20. Das Traggestell bzw. die Rahmenstruktur 8 umfasst einen Tragbügel 22. Die zweite Transporttasche 21 besteht also aus einen Tragbügel 22 und einer Schlaufe 23 die aus einem Gewebe gefertigt ist. Am oberen Ende des Tragbügels 22 ist ein Aufhängehaken 12 ausgebildet, der im Traghakens 11 eines Laufwagens 6 eingehängt ist. Die als Gewebebahn vorliegende Schlaufe 23 ist an einer oberen Schulter 34 des Tragbügels 22 auf der Höhe des Aufhängehakens 12 befestigt. Die obere Schulter 34 wird z. B. durch eine Querstange bzw. -strebe ausgebildet, an welcher insbesondere auch der Aufhängehaken 12 angebracht bzw. ausgeformt ist. Die Schlaufe 23 verläuft von der oberen Schulter 34 nach unten und bildet die Rückwand 27 des flexiblen Transportelements 7 aus. Die Rückwand 27 endet am Taschenbodenabschnitt 28, welcher ebenfalls von der Schlaufe 23 ausgebildet wird, und von wo die Schlaufe bzw. Gewebebahn 23 zu einer unteren Schulter 35 des Tragbügels 22 führt. Die untere Schulter 35 wird z. B. durch eine Querstange bzw. -strebe ausgebildet. Die Schlaufe bzw. Gewebebahn 23 ist über die untere Schulter 35 am Tragbügel 22 befestigt, und bildet so zwischen Taschenbodenabschnitt 28 und Schulter 35 die Vorderwand 26 aus. Oberhalb der Vorderwand 26 ist also der Tragbügel 22 angeordnet, der die Taschenöffnung 9 ausbildet. Der Tragbügel 22 enthält des Weiteren auch zwei Distanzhalter 29, welche auf je einer Seite zwischen Vorderwand 26 und Rückwand 27 angeordnet sind. Die Distanzhalter 29 sind zusammen mit der oberen und unteren Schulter 34, 35, zu einem insbesondere geschlossenen Bügel, wie Drahtbügel miteinander verbunden. Dieser bildet die Taschenöffnung 9 aus. Die Distanzhalter 29 beabstanden im geöffneten Zustand der Transporttasche 1.2 die Vorderwand 26 von der Rückwand 27 in einem oberen Bereich.

Die «Soft Pouch» 21 ist seitlich mit flexiblen Seitenwänden 25, insbesondere aus einem flexiblen Netzgewebe versehen. Diese verbinden die Vorderwand 26 und die Rückwand 27 in einem untern Taschenbereich miteinander.

Im aufgeklappten Zustand der Transporttasche bilden die Vorderwand 26, die Rückwand 27, die Seitenwände 25 und der Taschenbodenabschnitt 28 ein Aufnahmeraum 33 für Fördergüter aus.

Ein Schwenken des Tragbügels 22 in Förderrichtung F führt zu einem Öffnen der «Soft Pouch» 21 und gibt die Taschenöffnung 9 für den Aufnahmeraum 33 der weichen, biegeschlaffen Transporttasche 21 frei.

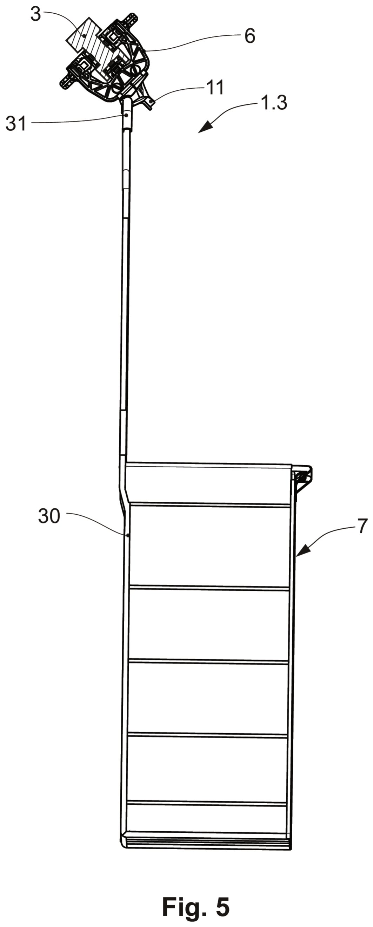

**Figur 5** zeigt eine dritte Ausführungsform einer Fördereinheit 1.3 mit einem Transportelement 7 in Form eines Traggestells 30. Ein solches Transportelement 7 hat den Vorteil, dass die Fördergüter 2 von aussen gut sichtbar sind.

In Figur 5 wird das Förderelement 5 in Gestalt des Laufwagens 6 zur Förderung des Traggestells 30 entlang einer Laufschiene 3 verwendet, wobei der Aufhängehaken des Traggestells 30 in den Traghaken 11 des Laufwagens 6 eingehängt ist. Der Aufhängehaken, welcher insbesondere ein offener Aufhängehaken ist, kann zwei aufliegende stabile Positionen im Traghaken 11 einnehmen.

In **Figur 6** ist ein Teil einer Förderanlage dargestellt. In einer Laufschiene 3 sind verschiedene Ausführungsformen von Fördereinheiten 1.1, 1.2 mit unterschiedlichen Transporttaschen 15, 21 hintereinander angeordnet. Der Antrieb ist nicht dargestellt. Transporttaschen sind besondere Formen von Transportelemente 7, da sie die Fördergüter 2 in sich aufnehmen. Auf diese Weise bieten die Transporttaschen 15, 21 einen gewissen Schutz für das Fördergut 2. Für empfindliche Fördergüter 2 sollten feste, biegesteife Transporttaschen 15 bzw. Transporttaschen 15 mit fester, biegesteifer Vorder- und Rückwand verwendet werden. Bei unempfindlichen Fördergütern 2 können so genannte «Soft Pouches» 21 zum Einsatz kommen. «Soft Pouches» 21 haben den zusätzlichen Vorteil, dass sie leichter und kostengünstiger sind als die festen biegesteifen Transporttaschen 15. Bei den festen biegesteifen Transporttaschen 7 spricht man auch von «Hard Pouches» 15.

Die «Soft Pouches» 21 sind leichter und bestehen aus einem dünnen Transporttaschenwandmaterial. Dadurch ist die «Soft Pouch» 21 nur zum Transport für unempfindliche Fördergüter 2 geeignet. Die «Hard Pouches» 15 sind grösser ausgestaltet und besitzen feste, stabile Transporttaschenwände, wie Rück- und Vorderwand 16, 17. Die «Hard Pouch» 15 ist durch ihre Ausgestaltung mit festen, biegesteifen Förder- bzw. Transporttaschenwände 16, 17 auch geeignet, empfindliche Fördergüter 2 zu transportieren.

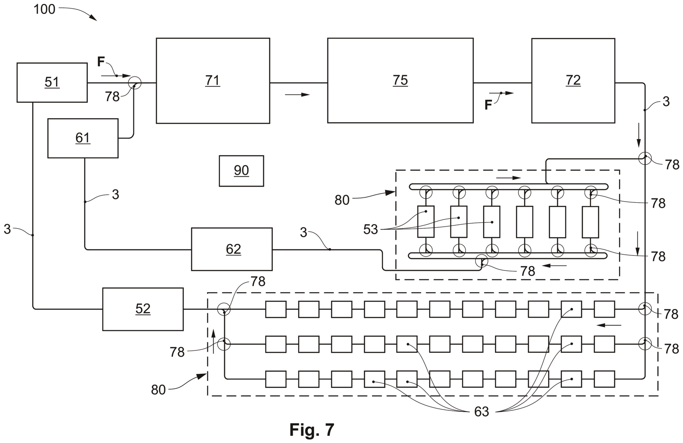

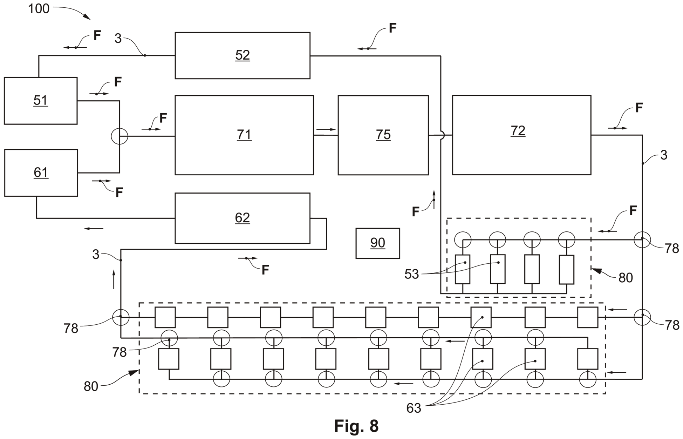

Beide Förder- bzw. Transporttaschentypen bzw. -arten benötigen unterschiedliche, automatisierte Abgabe- bzw. Entladestationen mit Entladevorrichtungen 53, 63, die für die jeweilige Transporttasche 15, 21 angepasst sind (siehe auch Figur 7 und 8). Dies bedeutet ferner, dass die jeweilige Transporttasche 15, 21 zu den jeweils zu den Transporttaschen 15, 21 angepasste Abgabe- bzw. Entladestationen mit entsprechenden an der Taschenart angepassten Entladevorrichtungen 53, 63 in der Förderanlage 100 hin gefördert werden, um dort das Fördergut 2 aus der Transpottasche 15, 21 zu entladen. Aus diesem Grund müssen in der Förderanlage 100 eine Vielzahl von schaltbaren Weichen 78 integriert sein, um die Transporttaschen 15, 21 gezielt zu den entsprechenden Abgabebereichen 80 für die jeweilige Transporttasche 15, 21 zu zuführen. Ein Abgabebereich 80 umfasst dabei jeweils eine Mehrzahl von Entladevorrichtungen 53, 63 eines spezifischen Typs von Entladevorrichtung 53, 63. Die Weichen 78 werden mittels einer übergeordneten Steuerungseinrichtung 90 so angesteuert bzw. geschaltet, dass die Transporttasche 15, 21 ihr vorbestimmtes Abgabeziel bzw. die richtige Entladevorrichtung 53, 63 im entsprechenden Abgabebereich 80 erreicht.

In **Figur** 7 und **Figur 8** sind schematische Darstellungen von Förderanlagen 100 wiedergegeben, in denen Fördereinheiten 1.1, 1.2 verarbeitet werden. Die Fördereinheiten 1.1, 1.2 sind in diesen Figuren nicht gezeigt. In der Figur 7 ist eine erste Beladevorrichtung 51 für «Soft Pouches» zu sehen, in der die biegeschlaffen Transporttaschen 21 mit Fördergütern 2 beladen werden. Die leeren «Soft Pouches» kommen von einem ersten Leertaschenpuffer 52, in dem leere Transporttaschen 21 von der Art «Soft Pouch» zwischengelagert werden, bis sie zum Beladen angefordert werden.

Neben der ersten Beladevorrichtung 51 ist eine zweite Beladevorrichtung 61 für «Hard Pouches» 15 zu sehen, in der die festen, biegesteifen Transporttaschen 15 mit Fördergütern 2 beladen werden können. Die leeren «Hard Pouches» 15 kommen von dem zweiten Leertaschenpuffer 62, in dem leere Transporttaschen 15 von der Art «Hard Pouch» zwischengelagert werden, bis sie zum Beladen in der zweiten Beladevorrichtung 61 angefordert werden.

Nach den beiden Beladevorrichtungen 51 und 61 werden die Transporttaschen 15, 21 über eine Weiche 78 auf einer gemeinsamen Förderschiene 3 zusammengeführt und zu einem Zwischenspeicher 71 gefördert. Die Transporttaschen 15, 21 können in dem Zwischenpuffer bzw. -speicher 71 zwischengespeichert werden, oder die Transporttaschen 15, 21 können den Zwischenspeicher 71 passieren, wenn die Transporttaschen 15, 21 zur Verarbeitung benötigt werden. Die zwischengespeicherten Transporttaschen 15, 21 werden bei Abruf von dem Zwischenspeicher 71 an eine Sortiervorrichtung 75 übergeben. In der Sortiervorrichtung 75 werden die einzelnen Transporttaschen 15, 21 zu einzelnen Aufträgen zusammenfasst und bilden dann einen kompletten Auftrag in Gestalt von mehreren Transporttaschen die hintereinander angeordnet sind.

Die einzelnen Anlagenkomponente sind mit Förderschienen 3 des Hängefördersystems miteinander verbunden an denen die Fördereinheiten 1 sich in Förderrichtung F entlang bewegen. Zwischen den einzelnen Anlagenkomponenten können Weichen 78 vorhanden sein die zum gezielten Fördern der Transporttaschen 15, 21 notwendig sind, damit die Fördereinheiten 1 die unterschiedlichen Anlagenkomponenten erreichen können. Die ganze Anlage wird mit einer übergeordneten Steuerungseinrichtung 90 gesteuert, so dass die Fördereinheiten 1.1, 1.2 ihren vorgesehenen Stationen erreichen können.

Die zusammengestellten Aufträge können nun in einem weiteren Zwischenlager bzw. - speicher 72 zwischengelagert werden, bis die Aufträge weiterverarbeitet werden können und zu den Abgabebereich 80 gefördert werden. Die fertig zusammengestellten Aufträge können aber auch direkt zu ihren Abgabebereich 80 gefördert werden, wo die Transporttaschen 15, 21 nacheinander mittels der Entladevorrichtungen 53 und 63 entladen werden können. Hierbei werden die weichen, biegeschlaffen Transporttaschen 21 in einer der ersten Entladevorrichtungen 53 entladen und die festen biegesteifen Transporttaschen 15 werden in einer der zweiten Entladevorrichtungen 63 entladen.

Die erste Entladevorrichtung 53 ist speziell für die «Soft Pouches» 21 angepasst, so dass die «Soft Pouches» 21 automatisiert entladen werden können. Nach dem Entladen werden die «Soft Pouches» 21 in den ersten Leertaschenpuffer 52 überführt, wo sie auf ihren nächsten Transportauftrag warten.

Die zweite Entladevorrichtung 63 ist speziell für die «Hard Pouches» 15 angepasst, so dass die «Hard Pouches» 15 automatisiert entladen werden können. Nach dem Entladen werden die «Hard Pouches» 15 in den zweiten Leertaschenpuffer 62 überführt, wo sie auf ihren nächsten Transportauftrag warten.

An den Abgabe- bzw. Entladestationen, welchen die Entladevorrichtungen 53, 63 zugeordnet sind, werden die entladenden Fördergüter 2 eines Auftrages versandfertig verpackt und der Spedition übergeben.

Die Figuren 7 und 8 unterscheiden sich in der Anordnung der Entladevorrichtungen 53, 63. In Figur 7 sind die ersten Entladevorrichtungen 53 alle parallel angeordnet und die zweiten Entladevorrichtungen 63 sind alle in Reihe angeordnet. In Figur 8 sind die zweiten Entladevorrichtungen 63 teilweise parallel angeordnet und teilweise in Reihe angeordnet.

Des Weiteren können auch jeweils eine erste Entladevorrichtung 53 und eine zweite Entladevorrichtung 63 nebeneinander angeordnet sei. So können Fördergüter 2 von der «Soft Pouch» und Fördergüter 2 von der «Hard Pouch» an einem gemeinsamen Förderziel bzw. an einer gemeinsamen Entladestation abgegeben werden. So kann eine Entladestation sowohl eine erste als auch eine zweite Entladevorrichtung 53, 63 enthalten.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. **Förderanlage** (100) mit einer Mehrzahl von Fördereinheiten (1.1, 1.2) zum hängenden Transport von Fördergütern (2), insbesondere eine schienengeführte Förderanlage (100), wobei die Fördereinheiten (1.1, 1.2) jeweils ein Förderelement (5), insbesondere einen Laufwagen (6), mit einem an diesem angebrachten Traghaken (11) und ein als Transporttasche (15, 21) ausgeführtes Transportelement (7), welches mit einer Rahmenstruktur (8) ausgestattet ist, und mit einem an der Rahmenstruktur (8) angebrachten Aufhängehaken (12) versehen ist, enthalten, wobei der Aufhängehaken (12) im Traghaken (11) des Förderelementes (5) hängend gelagert ist, wobei die Transporttaschen (15, 21) in Fördererrichtung (F) jeweils eine vorlaufende und eine nachlaufende Taschenwand (16, 17; 26, 27) aufweisen, die über einen Taschenbodenabschnitt (18, 28) miteinander verbunden sind, wodurch ein Aufnahmeraum (33) ausbildet wird, in dem die Fördergüter (2) gefördert werden können,
**dadurch gekennzeichnet, dass**
die Transportelemente (7) von mindestens zwei Fördereinheiten (1.1, 1.2) als unterschiedlich ausgestaltete Transporttaschen (15, 21) ausgeführt sind, und die Förderanlage (100) taschenspezifische Entladevorrichtungen (53, 63) enthält, so dass die unterschiedlich ausgestalteten Transporttaschen (15, 21) der Fördereinheiten (1.1, 1.2) zur Entladung der Fördergüter (2) jeweils einer taschenspezifischen Entladevorrichtung (53, 63) zugeführt werden können.

2. Förderanlage (100) nach Anspruch 1, **dadurch gekennzeichnet, dass** die Rahmenstruktur (8) aus einem Drahtmaterial geformt ist.

3. Förderanlage (100) nach Anspruch 1 oder 2, **dadurch gekennzeichnet, dass** die Förderanlage (100) taschenspezifische Beladevorrichtungen (51, 61) enthält, und die unterschiedlich ausgestalteten Transporttaschen (15, 21) zur Beladung mit Fördergütern (2) jeweils einer taschenspezifischen Beladevorrichtung (51, 61) zugeführt werden können.

4. Förderanlage (100) nach einem der vorangehenden Ansprüche 1 bis 3, **dadurch gekennzeichnet, dass** das Taschenwandmaterial der Transporttasche (15) einer ersten Fördereinheit (1.1), insbesondere der vorlaufenden und nachlaufenden Taschenwand (26, 27), aus mindestens einem biegefesten Material, wie Kunststoffmaterial, Hohlkammermaterial, Verbundmaterial, Mehrschichtmaterial oder Metall, besteht.

5. Förderanlage (100) nach einem der vorangehenden Ansprüche 1 bis 4, **dadurch gekennzeichnet, dass** das Taschenwandmaterial der Transporttasche (21) einer zweiten Fördereinheit (1.2), insbesondere der vorlaufenden und nachlaufenden Taschenwand (26, 27), aus flexiblem, insbesondere flächenförmigem Material, wie einem Gewebe, einem Textilverbundstoff bzw. textilen Flächengebilde, wie Vlies oder Filz, einem Folienmaterial, einem Gummi oder einem Silikongummi besteht.

6. Förderanlage (100) nach einem der vorangehenden Ansprüche 1 bis 5, **dadurch gekennzeichnet, dass** das Förderelement (6) ein Identifikationsmittel (13), insbesondere auf dem Laufwagen (6) aufweist.

7. Förderanlage (100) nach einem der vorangehenden Ansprüche 1 bis 6, **dadurch gekennzeichnet, dass** die unterschiedlich ausgestalteten Transporttaschen (15, 21) der Fördereinheiten (1.1, 1.2) Identifikationsmittel (13) aufweisen.

8. Förderanlage (100) nach einem der vorangehenden Ansprüche 1 bis 7, **dadurch gekennzeichnet, dass** die unterschiedlich ausgestalteten Transporttaschen (15, 21) der Fördereinheiten (1.1, 1.2) unterschiedliche Aufnahmevolumen bzw. unterschiedlich grosse Aufnahmeräume (33) für Fördergüter (2) aufweisen.

9. Förderanlage (100) nach einem der vorangehenden Ansprüche 1 bis 8, **dadurch gekennzeichnet, dass** das Transportelement (7) der Fördereinheiten (1.1, 1.2) jeweils eine vertikale Drehachse (S) aufweist, um welche die unterschiedlich ausgestalteten Transporttaschen (15, 21) drehbar sind.

10. Förderanlage (100) nach einem der vorangehenden Ansprüche 1 bis 9, **dadurch gekennzeichnet, dass** die Förderanlage (100) taschenspezifische Leertaschenpuffer (52, 62) enthält, und die unterschiedlich ausgestalteten, leeren Transporttaschen (15, 21) unterschiedlichen Leertaschenpuffern (52, 62) zugeführt werden.

11. Förderanlage (100) nach einem der vorangehenden Ansprüche 1 bis 10, **dadurch gekennzeichnet, dass** eines oder mehrere oder sämtliche der folgenden Merkmale zutrifft bzw. zutreffen:
- die mindestens zwei Fördereinheiten (1.1, 1.2) enthalten die gleichen Aufhängehaken (12);
- die mindestens zwei Fördereinheiten (1.1, 1.2) enthalten die gleichen Förderelemente (5), wie Laufwagen (6);
- die mindestens zwei Fördereinheiten (1.1, 1.2) enthalten die gleichen Traghaken (11).

12. Förderanlage (100) nach einem der vorangehenden Ansprüche 1 bis 11, **gekennzeichnet durch** mindestens eine weitere, dritte Fördereinheit (1.3) zum hängenden Transport von Fördergütern (2), welche ein Förderelement (5), insbesondere einen Laufwagen (6), mit einem an diesem angebrachten Traghaken (11) und ein als Traggestell (30) ausgeführtes Transportelement (7) mit einem am Traggestell (30) angebrachten Aufhängehaken (12) enthält, wobei der Aufhängehaken (12) im Traghaken (11) des Förderelementes (5) hängend gelagert ist.

13. Förderanlage (100) nach einem der vorangehenden Ansprüche 1 bis 12, **dadurch gekennzeichnet, dass** die Transporttaschen (15, 21) der mindestens zwei Fördereinheiten (1.1, 1.2) jeweils einen Taschenbodenabschnitt (18, 28) bzw. Taschenboden enthalten, welcher geöffnet werden kann, so dass eine Entladung der Transporttaschen (15, 21) nach unten durch den geöffneten Taschenbodenabschnitt (18, 28) bzw. Taschenboden erfolgen kann.

14. Förderanlage (100) nach einem der vorangehenden Ansprüche 1 bis 13, **dadurch gekennzeichnet, dass** die Förderanlage (100) mit mindestens einer, insbesondere mit einer Mehrzahl von schaltbaren Weichen (78) ausgestattet ist, um getrennt geförderte erste und zweite Fördereinheiten (1.1, 1.2) mit unterschiedlich ausgebildeten Transporttaschen (15, 21) auf einer gemeinsamen Förderschiene (3) zusammenzuführen und gemeinsam zu fördern und/oder um auf einer Förderschiene (3) gemeinsam geförderte erste und zweite Fördereinheiten (1.1, 1.2) mit unterschiedlich ausgebildeten Transporttaschen (15, 21) auf verschiedene Förderschienen zu leiten und voneinander getrennt zu fördern.

15. **Verfahren** zum Betreiben einer Förderanlage (100) nach einem der Ansprüche 1 bis 14, **gekennzeichnet durch** die Schritte:
- gleichzeitiges Transportieren von mindestens zwei Fördereinheiten (1.1, 1.2) mit unterschiedlich ausgestalteten Transporttaschen (15, 21) entlang einer Förderbahn der Förderanlage;
- gegebenenfalls Zuführen der mindestens zwei Fördereinheiten (1.1, 1.2) an unterschiedliche, taschenspezifische Leertaschenpuffer (52, 62);
- gegebenenfalls Beladen der mindestens zwei Fördereinheiten (1.1, 1.2) an unterschiedlichen, taschenspezifischen Beladevorrichtungen (51, 61);
- gegebenenfalls Entladen der mindestens zwei Fördereinheiten (1.1, 1.2) an unterschiedlichen, taschenspezifische Entladevorrichtungen (53, 63).

16. Verfahren nach Anspruch 15, **dadurch gekennzeichnet, dass** getrennt geförderte erste und zweite Fördereinheiten (1.1, 1.2) mit unterschiedlich ausgebildeten Transporttaschen (15, 21) nach dem Beladen an den Beladevorrichtungen (51, 61) über eine Weiche (78) auf einer gemeinsamen Förderschiene (3) zusammengeführt und gemeinsam weiter gefördert werden und/oder dass gemeinsam auf einer Förderschiene (3) geförderte erste und zweite Fördereinheiten (1.1, 1.2) mit unterschiedlich ausgebildeten Transporttaschen (15, 21) mittels einer Weiche (78) auf verschiedene Förderschienen geleitet und voneinander getrennt zu den Entladevorrichtungen (53, 63) bzw. zu den die Entladevorrichtungen (53, 63) enthaltenden Abgabebereiche gefördert werden.
